Europäisches Patentamt

European Patent Office

Office européen des brevets

(11) Publication number: **0 381 730 B1**

# EUROPEAN PATENT SPECIFICATION

(45) Date of publication of patent specification: **27.04.94**

(51) Int. Cl.⁵: **G01K 7/20**, G01D 3/02, G01L 1/22

(21) Application number: **89908432.1**

(22) Date of filing: **21.07.89**

(86) International application number:
**PCT/EP89/00865**

(87) International publication number:
**WO 90/01151 (08.02.90 90/04)**

(54) **LINEARIZATION CIRCUIT.**

(30) Priority: **21.07.88 US 222412**

(43) Date of publication of application:
**16.08.90 Bulletin 90/33**

(45) Publication of the grant of the patent:
**27.04.94 Bulletin 94/17**

(84) Designated Contracting States:
**AT BE CH DE FR GB IT LI LU NL SE**

(56) References cited:
**DE-A- 2 129 567**
**FR-A- 2 124 435**

**Patent Abstracts of Japan, vol. 9, no. 33
(P-334)(1756), 13 February 1985 & JP, A,
59176636**

(73) Proprietor: **THERMO ELECTRIC INTER-
NATIONAAL B.V.
Veerpolder 40
NL-2361 KW Warmond(NL)**

(72) Inventor: **REIS, Carlos Alberto Dos
Rua Dr. Ruy Vic. de Mello 462
Cidade Universitaria
Campinas 13083-Campinas, SP(BR)**

(74) Representative: **White, William et al
Novator AG
Thurgauerstrasse 40
Postfach 8815
CH-8050 Zürich (CH)**

**Description**

The present invention relates to a linearization circuit for a condition-sensitive element with a excitation current means connected at a common junction to the condition-sensitive element, which is further connected to the input of a voltage-to-current converter of which the output is fed back over a feedback resistor to the common junction for linearising the voltage at said common junction.

As is the case with most types of impedance transducers, condition-sensitive elements such as temperature-sensitive resistance transducers have a resistance which is dependent upon temperature, and have a nonlinear electrical characteristic. This is to say, changes in temperature of the element do not give raise to direct proportional changes in resistance of the element.

Such transducers are often employed in arrangements where it is extremely desirable to obtain an output signal which is linearly related to the particular condition sensed, such as e.g. the temperature, to which the transducer is responsive. This is due to the fact, that any inherent nonlinearity in a condition sensing element tends to amplify the nonlinearity of the whole arrangement using the condition-sensitive element.

There are various attemps to linearise such arrangements known. One of them is presented in DE-A-2129567. The temperature sensitive element is connected to a constant current source and ground. The hot connection is connected over a resistor to the inverting input of an amplifier which is connected through a feedback resistor to its output. Also connected to this input is the output of a second constant current source. The second or noninverting input of the amplifier is grounded via a resistor. The output voltage of the amplifier is not direct proportional to the temperature changes due to a part of the output voltage being fed back to the constant current source which superposes the constant current from constant current source. As this is a regenerative feedback the changeing component of the constant current through the sensitive element becoms bigger with increasing resistance of the sensitive element. This effect is then corrected with a second constant current source, one output of it being also connected to the input of the amplifier for adding two currents. The supply voltage of the second constant current source is opposite to the one supplying the sensitive element. Such an arragement is a correction means for a defective arrangement instead of forming an arrangement working correctly.

The present invention has to resolve the problem of linearization of the voltage or current of a condition sensitive element by means of a simple and reliable arrangement without correcting means and mor particularly to a linearization circuit for application in connection with condition-sensitive elements, such as temperature-sensitive resistors used as remote sensors.

In accordance with the present invention the circuit is characterized by a power supply means having a first terminal connected to said excitation current means and a second terminal connected via a voltage source to said condition-sensitive element.

The drawing show examples of the invention of which the figures give

Fig 1. a circuit diagram of a first embodiment of the invention,

Fig 2. a circuit diagram of a second embodiment of the invention, and

Fig.3. a circuit diagram of a third embodiment of the invention.

The invention will now be described in more detail with reference to the accompanying drawings.

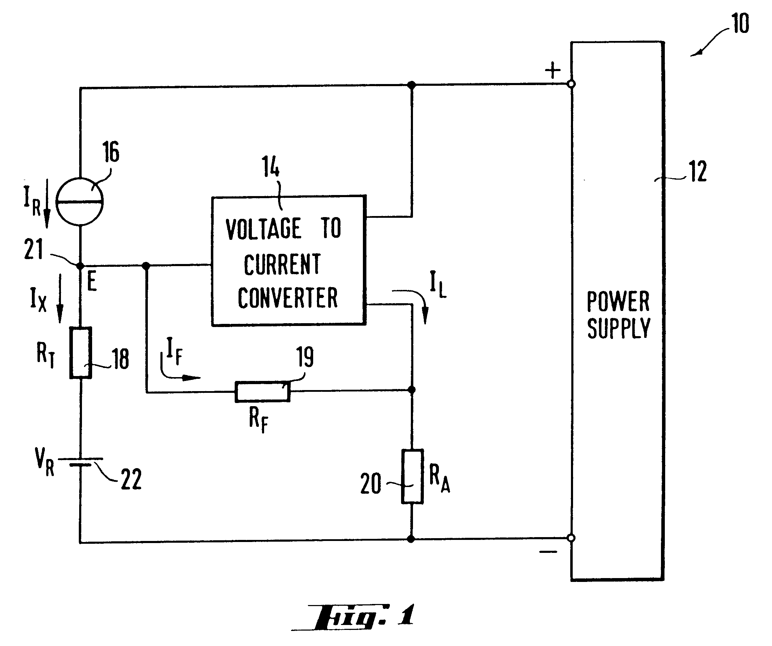

Figure 1 is a circuit diagram of a first embodiment of the linearization circuit of the present invention. As seen therein, the linearization circuit 10 comprises a power supply 12, voltage-to-current converter 14, constant current source 16, temperature-sensitive resistor 18, feedback resistor 19, return path resistor 20, and voltage source 22.

In general, the aforementioned circuit elements form an arrangement which is connected to power supply 12 via its positive and negative terminals. The circuit 10 serves as a signal conditioner for a remote sensor incorporating the temperature-sensitive resistor 18, and provides a current output signal via the two-wire arrangement, which current output signal is linearly related to the temperature being experienced by the temperature-sensitive resistor 18.

Constant current source 16 acts as an excitation current source or current sink for applying current $I_x$ to the temperature-sensitive resistor 18. The junction 21 between the source 16 and resistor 18 is connected to the input of converter 14, as well as to the feedback resistor 19. The converter 14 and source 16 are, preferably, commonly biased by power supply 12 via its positive terminal. Converter 14 provides, at its output, a current signal having a linear function relationship to the voltage E appearing at the input of converter 14, and this function can be expressed by the following equation:

$$I_L = I_o + K \cdot E \qquad (1)$$

2

In the latter equation, $I_o$ is an offset current, K is the voltage-to-current conversion factor in amperes/volts, and "•" signifies multiplication.

The output current $I_L$ of converter 14 is split into two portions, one of which flows through resistor 20, the other flowing through feedback resistor 19. The voltage E at the input of converter 14 results from the addition of the voltage provided by voltage source 22 and the voltage developed across the temperature-sensitive resistor 18 itself (by virtue of excitation current $I_X$). The excitation current is given by the following equation:

$$I_X = I_R - I_F \qquad (2)$$

In the latter equation, $I_R$ is a constant current from the source 16, while $I_F$ varies in accordance with the current resistance value $R_T$ of resistor 18. The value of current $I_F$ is given by the following equation:

$$I_F = \frac{1}{(R_A + R_F)} \, [E \cdot (1 - K \cdot R_A) - R_A \cdot I_o] \qquad (3)$$

where

$$E = V_R + R_T \cdot I_X$$

The resistance of the temperature-sensitive element 18 is related to the temperature by the following equation:

$$R_T = R_{T_o} (1 + \alpha \cdot t + \beta \cdot t^2) \qquad (4)$$

where $R_{T_o}$ is the resistance value at zero degrees Celsius, $\alpha = 3.9 \times 10^{-3} K^{-1}$ and $\beta = -5.8 \times 10^{-7} K^{-2}$.

Consequently, the following relationship for the voltage E at the input of converter 14 can be established:

$$\frac{E}{E_R} = \frac{(b+c) + \alpha \cdot b \cdot t + \beta \cdot b \cdot t^2}{(a+1) + \alpha \cdot a \cdot t + \beta \cdot a \cdot t^2} \qquad (5)$$

where

$$E_R = R_{T_o} \cdot I_R \qquad (6)$$

$$a = \frac{(1 - K \cdot R_A)}{(R_A + R_F)} \cdot R_{T_o} \qquad (7)$$

$$b = 1 + \frac{(R_A \cdot I_o)}{(R_A + R_F)} \cdot \frac{1}{I_R} \qquad (8)$$

$$c = \frac{V_R}{I_R} \cdot \frac{1}{R_{T_o}} \qquad (9)$$

3

The relationship (5), which is a rational polynomial, can be rewritten as:

$$\frac{E}{E_R} = r_o + r_1 \cdot t + r_2 \cdot t^2 \qquad (10)$$

where:

$$r_o = \frac{b + c}{a + 1} \qquad (11)$$

$$r_1 = \alpha \cdot (b - a \cdot c) \qquad (12)$$

$$r_2 = (b - a \cdot c) \cdot [\beta - (a + 1) \cdot a \cdot \alpha^2] \qquad (13)$$

As the output current of the converter 14 is linearly related to the input voltage E, it is necessary to cancel the second-order term in equation (10) to achieve linearization of this parameter.

That is:

$$\frac{\beta}{\alpha^2} = a \cdot (a+1) \qquad (14)$$

By substituting equation (7) into equation (14), an expression for the feedback resistance $R_F$ can be established:

$$R_F = \frac{-B - \sqrt{B^2 - 4 \cdot A \cdot C}}{2 \cdot A} \qquad (15)$$

where:

$$A = \frac{\beta}{\alpha^2} \qquad (16)$$

$$B = 2 \cdot R_A \cdot A - R_{To} \cdot (1 - K \cdot R_A) \qquad (17)$$

$$C = A \cdot R_A^2 - R_{To} \cdot R_A \cdot (1 - K \cdot R_A) - R_{To}^2 \cdot (1 - K \cdot R_A)^2 \qquad (18)$$

Therefore, given a voltage-to-current conversion factor K, a resistance value $R_A$, and the zero-degree Celsius value of $R_T$, the feedback resistance $R_F$ is calculated from equation (15) to establish the linearization of the output current of the apparatus. For example, where K = 0.175 amperes/volts, $R_{To}$ = 100 ohms and $R_A$ = 50 ohms, then $R_F$ = 19.5 Kohms.

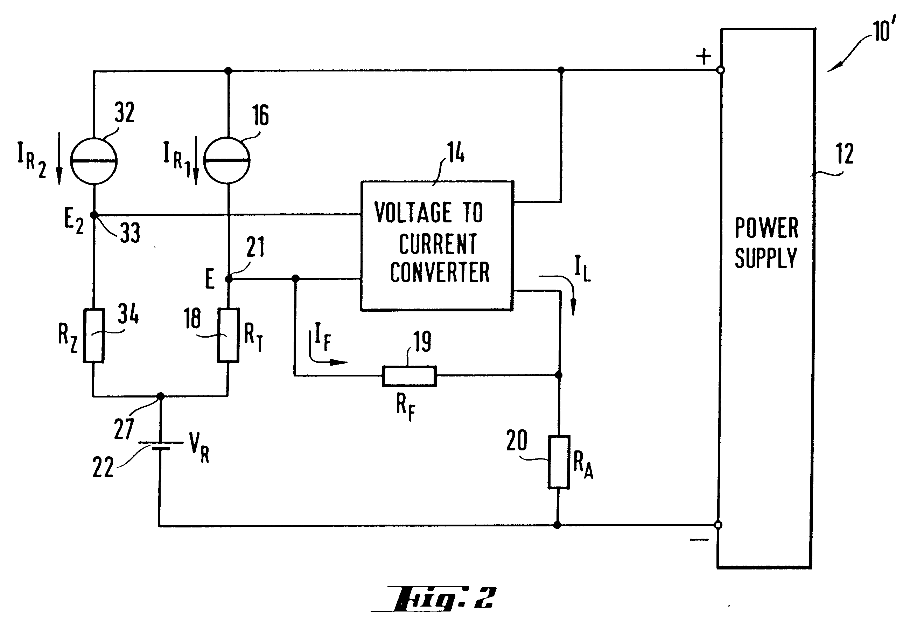

Figure 2 is a circuit diagram of a second embodiment of the linearization circuit of the present invention. Where appropriate reference numerals identical to those used in Figure 1 have been retained in Figure 2.

In the linearization circuit 10' of Figure 2, an additional constant current source 32 is connected in series with a resistor 34, and the latter series-connected circuit elements are connected in parallel with source 16 and temperature-sensitive resistor 18, resistors 18 and 34 and voltage source 22 being

4

EP 0 381 730 B1

interconnected at junction 27. A junction 33 between source 32 and resistor 34 is connected to an additional input of converter 14. Thus, converter 14 has a differential input; that is, converter 14 detects the voltage $E_1$ between source 16 and resistor 18, and also detects the voltage $E_2$ between source 32 and resistor 34.

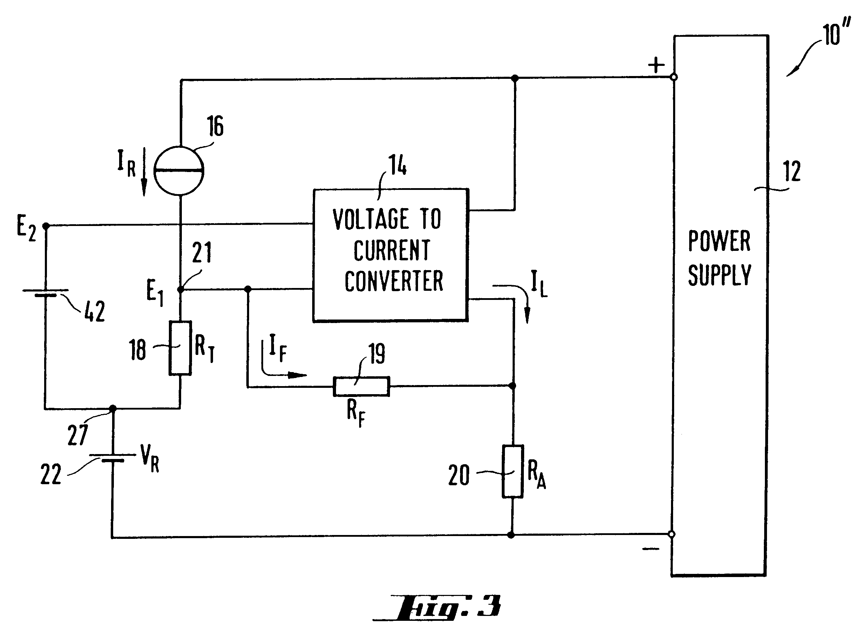

Figure 3 is a circuit diagram of a third embodiment of the linearization circuit of the present invention. Where appropriate, reference numerals identical to those employed in previous Figure 1 have been retained in Figure 3.

In the linearization circuit 10'' of Figure 3, a voltage source 42 is connected between an additional input of converter 14, on the one hand, and the junction 27 between temperature-sensitive resistor 18 and voltage source 22, on the other hand. Again, this amounts to a differential arrangement of converter 14 in that converter 14 detects the voltage $E_1$ between source 15 and resistor 18, and also detects the voltage $E_2$ at the positive terminal of voltage source 42.

It should be noted that power supply 12 in Figures 1-3 discussed above can be any conventional power supply. Similarly, voltage-to-current converter 14 can be any conventional voltage-to-current converter, and constant current sources 16 and 32 can be any conventional constant current sources known to those of skill in the art.

## Claims

1. A linearization circuit for a condition-sensitive element (18) with an excitation current means (16) connected at a common junction (21) to the condition-sensitive element (18) and further connected to the input of a voltage-to-current converter (14) of which the output is fed back over a feedback resistor (19) to the common junction (21) for linearising the voltage at said common junction (21), **characterised therby**, that a power supply means (12) having a first terminal ( + ) connected to said excitation current means (16) and a second terminal (-) via a voltage source (22) to said condition-sensitive element (18) is provided.

2. Circuit of claim 1, **caracterized thereby**, that said feedback resistor (19) is connected to said output of said converter means (14) at a further junction, which further junction being connected to said second terminal (-) of said power supply means (12) via a resistor (20).

3. Circuit of claim 1, **characterized by** a second voltage source (42) connected between an additional input of said converter means (14) and said condition-sensitive element (18).

4. Circuit of claim 3, **characterized thereby**, that said second voltage source (42) has a first end connected to said additional input of said converter means (14) and a second end connected to said condition-sensitive element, said second end of said second voltage source (42) also being connected to said second terminal of said power supply means (12).

5. Circuit of one of the foregoing claims, **characterized thereby**, that said excitation current means (16) and said converter means (14) are in common voltage biased by said power supply means (12).

## Patentansprüche

1. Schaltungsanordnung zur Linearisierung für ein Sensor - Element (18) mit einem Erregerstrommittel (16), das an einer gemeinsamen Verbindungsstelle (21) für das Sensor - Element (18) und weiter noch verbunden mit dem Eingang eines Spannungs-zu-Strom Wandlers (14), dessen Ausgang über einen Rückführungswiderstand (19) auf die gemeinsame Verbindungsstelle rückgekoppelt ist, um die Spannung an der genannten gemeinsamen Verbindungsstelle (21) zu linearisieren, dadurch gekennzeichnet, dass von einem Energieliefermittel (12) der erste Anschluss ( + ) an das genannte Erregerstrommittel (16) angeschlossen ist und der zweite Anschluss (-) über eine Spannungsquelle (22) mit dem genannten Sensor - Element (18) verbunden ist.

2. Schaltungsanordnung nach Anspruch 1, dadurch gekennzeichnet, dass der Rückführungswiderstand (19) mit dem Ausgang des Wandler (14) an einer weiteren Verbindungsstelle, die mit dem genannten zweiten Anschluss (-) des Energieliefermittels (12) über einen Widerstand (20) verbunden ist.

3. Schaltungsanordnung nach Anspruch 1, gekennzeichnet durch eine zweite Spannungsquelle (42), die zwischen einen zusätzlichen Eingang des Wandlers (14) und dem Sensor - Element (18) angeschlos-

5

sen ist.

**4.** Schaltungsanordnung nach Anspruch 3, dadurch gekennzeichnet, dass von der genannten zweiten Spannungsquelle (42) der eine Anschluss mit dem zusätzlichen Eingang des Wandlers (14) und der zweite Anschluss mit dem Sensor - Element (18) verbunden ist, und der zweite Anschluss dieser zweiten Spannungsquelle (42) ebenfalls mit dem zweiten Anschluss des Energieliefermittels (12) verbunden ist.

**5.** Schaltungsanordnung nach einem der vorangehenden Ansprüche, dadurch gekennzeichnet, dass das Erregerstrommittel (16) und der Wandler (14) durch das Energieliefermittel (12) in gemeinsamer Spannungsverbindung vorgespannt ist.

**Revendications**

**1.** Circuit de linéarisation pour un élément (18) sensible aux conditions d'un état, ce circuit comportant un moyen ou une source (16) de courant d'excitation, moyen relié à une jonction commune (21) à l'élément (18) sensible aux conditions d'un état et relié en outre à l'entrée d'un convertisseur (14) de tension électrique en courant, dont la sortie est reliée, par une résistance (19) de retour, à la jonction commune (21) pour linéariser la tension électrique à ladite jonction (21) commune, circuit caractérisé en ce que le moyen (12) d'alimentation en énergie comporte une première borne ( + ) reliée audit moyen (16) fournisseur de courant d'excitation et une seconde borne (-) reliée, par l'intermédiaire d'une source (22) de tension, audit élément (18) sensible aux conditions d'un état.

**2.** Circuit selon la revendication 1, caractérisé en ce que ladite résistance (19) de retour est reliée à ladite entrée dudit moyen convertisseur (14) en une autre jonction, laquelle autre jonction est reliée, par l'intermédiaire d'une résistance (20) à ladite seconde borne (-) dudit moyen (12) de fourniture d'énergie.

**3.** Circuit selon la revendication 1, caractérisé par une seconde source (42) de tension électrique branchée entre une entrée supplémentaire dudit moyen convertisseur (14) et ledit élément (18) sensible aux conditions d'un état.

**4.** Circuit selon la revendication 3, caractérisé en ce que ladite seconde source (42) de tension électrique comporte une première extrémité reliée à ladite entrée supplémentaire dudit moyen convertisseur (14) et une seconde extrémité reliée audit élément sensible aux conditions d'un état, cette seconde extrémité de ladite seconde source (42) de tension électrique étant également reliée à ladite seconde borne dudit moyen (12) d'alimentation en énergie.

**5.** Circuit selon l'une quelconque des revendications précédentes, caractérisé en ce que le moyen (16) de fourniture d'un courant d'excitation et ledit moyen convertisseur (14) sont tous deux soumis à la même tension de polarisation appliquée par ledit moyen (12) de fourniture d'énergie.

*Fig. 1*

*Fig. 2*

**Fig. 3**